# EUROPÄISCHE PATENTANMELDUNG

(11) **EP 2 383 144 A2**
(43) Veröffentlichungstag der Anmeldung: **02.11.2011**
(21) Anmeldenummer: 11003363.6
(22) Anmeldetag: 21.04.2011
(51) Int. Cl.: B60N 2/14, B60N 2/68

(54) **Vorrichtung zur Anbindung eines Fahrzeugsitzes an eine Dreheinheit, Dreheinheit und Fahrzeugsitz**

(30) Priorität: 28.04.2010 DE 102010018664
(71) Anmelder: AGUTI PRODUKTENTWICKLUNG & DESIGN GMBH, 88085 Langenargen (DE)
(72) Erfinder: Grieger, Andreas, 88079 Kressbronn (DE)
(74) Vertreter: Dobler, Markus

(57) **Zusammenfassung**

Es wird eine Vorrichtung zur Anbindung eines Fahrzeugsitzes an eine Dreheinheit vorgeschlagen, die für eine Drehbewegung des Fahrzeugsitzes um eine aufrechte Drehachse ausgebildet und auf einer oberen Seite mit dem Fahrzeugsitz und auf einer unteren Seite stationär anbindbar ist. Erfindungsgemäß sind zur Anbringung an der oberen Seite der Dreheinheit bezüglich der Drehachse gegenüberliegende plattenförmige Adaptionselemente (14a, 14b) mit einem freien Abstand zueinander vorhanden, wobei die Adaptionselemente (14a, 14b) zur gemeinsamen Aussteifung über Hohlprofilmittel (15) verbunden sind, die auf den Adaptionselementen (14a, 14b) aufgesetzt sind, und die Hohlprofilmittel (14a, 14b) zumindest Hohlprofilabschnitte umfassen, die beabstandet voneinander jeweils den freien Abstand zwischen den Adaptionselementen (14a, 14b) überspannen und nach einer Richtungsänderung entlang der Adaptionselemente (14a, 14b) verlaufen.

## Beschreibung

### Stand der Technik

Drehsitze in Fahrzeugen und dazugehörige Dreheinheiten sind bereits in vielfältigen Ausgestaltungen bekannt geworden.

Mir einer Dreheinheit ist es insbesondere möglich, einen Fahrzeugsitz um eine aufrechte bzw. vertikale Achse drehbar in einem Fahrzeug unterzubringen.

Die Lagerung des Sitzes im Fahrzeug muss stabil und platzsparend möglich sein.

### Aufgabe und Vorteile der Erfindung

Der Erfindung liegt die Aufgabe zugrunde, Anordnungen für über einen Drehmechanismus aufgenommene Fahrzeugsitze technisch und wirtschaftlich zu verbessern, insbesondere im Hinblick auf eine platzsparende Bauweise bei hoher mechanischer Stabilität.

Diese Aufgabe wird durch die unabhängigen Ansprüche gelöst.

In den abhängigen Ansprüchen sind vorteilhafte Varianten der Erfindung aufgezeigt.

Die Erfindung geht aus von einer Vorrichtung zur Anbindung eines Fahrzeugsitzes an eine Dreheinheit, die für eine Drehbewegung des Fahrzeugsitzes um eine aufrechte Drehachse ausgebildet ist und die auf einer oberen Seite mit dem Fahrzeugsitz und auf einer unteren Seite stationär anbindbar ist. Die Anbindungsvorrichtung wirkt insbesondere verbindend zwischen dem Fahrzeugsitz und der Dreheinheit. Die Anbindungsvorrichtung kann zum Beispiel separat bereitgestellt werden und/oder an der Dreheinheit oder dem Fahrzeugsitz vorhanden sein.

Der Kern der Erfindung liegt darin, dass zur Anbringung der oberen Seite der Dreheinheit, bezüglich der Drehachse gegenüberliegende plattenförmige Adaptionselemente mit einem freien Abstand zueinander vorhanden sind, wobei die Adaptionselemente zur gemeinsamen Aussteifung über Hohlprofilmittel verbunden sind, die auf den Adaptionselementen aufgesetzt sind und die Hohlprofilmittel zumindest Hohlprofilabschnitte umfassen, die beabstandet voneinander jeweils den freien Abstand zwischen den Adaptionselementen überspannen und nach einer Richtungsänderung entlang der Adaptionselemente verlaufen. Die zumindest abschnittsweise hohlen Hohlprofilmittel dienen zur Aussteifung der mit den beiden Adaptionselementen gebildeten Anbindungsvorrichtung. Die Anbindungsvorrichtung ist einerseits mit dem Fahrzeugsitz verbindbar und andererseits mit einem drehbaren Teil der Dreheinheit, welche einen Drehmechanismus aufweist, der z. B. ein Pressteil insbesondere aus Stahl in Verbindung mit einem Kugellager umfasst. Zur Anbindung einer standardisierten Dreheinheit an unterschiedliche Fahrzeugsitze werden die plattenförmigen Elemente für eine jeweilige passende Adaptation ausgestaltet. Die Adaptationselemente können individuell bezüglich Form, Größe und Material abgestimmt sein auf den jeweiligen Fahrzeugsitz bzw. Einsatzzweck und können zum Beispiel entsprechende Lochbilder für eine Anschraubung der Adaptationselemente an geeignet vorbereiteten Gegenabschnitten aufweisen.

Bisher erfolgt die Anbindung des Fahrzeugsitzes an eine Dreheinheit mit schweren bzw. platzraubenden Konstruktionen und/oder auf nur unzureichend stabile Weise. °

Um insbesondere sicherheitsrelevante Aspekte zu erfüllen, ist mit der erfindungsgemäßen Anordnung eine erhöhte mechanische Stabilität vorteilhaft einrichtbar, insbesondere ist eine ausreichend hohe Biege- bzw. Torsionsstabilität platzsparend und mit geringem Gewicht einrichtbar, was über die Hohlprofilmittel in Kombination mit den plattenartigen Adaptionselementen möglich ist.

Die Überbrückung des freien Abstands durch die beabstandeten Hohlprofilabschnitte erfolgt über mindestens ein Hohlprofilabschnitt.

Die Hohlprofilmittel können auf der oberen Seite der Adaptionselemente, also auf der zum Fahrzeugsitz gerichteten Oberseite, und/oder auf der unteren Seite, also auf der vom Fahrzeugsitz abgewandten Unterseite fixiert sein.

Wesentlich für eine starke Aussteifung der Gesamtanordnung aus den mit den Hohlprofilmitteln verbundenen Adaptionselementen ist außerdem, dass die Hohlprofilmittel auf der betreffenden Seite der Adaptionselemente nicht nur an einer Stelle aufgesetzt fixiert sind, sondern sich über wesentliche Abschnitte der Adaptionselemente erstrecken.

Dies bedeutet, dass die Hohlprofilmittel nach dem Überspannen des freien Abstands mit Erreichen eines Adaptionselements dort nicht enden z. B. stumpf oder stirnseitig dort verbunden sind, sondern auf der betreffenden Seite des Adaptionselements aufsitzend weitergeführt sind, wobei sich die Ausrichtung der Hohlprofilmittel gegenüber der Ausrichtung im Bereich des überbrückten freien Abstands zwischen den Adaptionselementen ändert.

Ausgehend von geraden Teilabschnitten der Hohlprofilmittel kann die Richtungsänderung mit einem Radius oder winklig realisiert sein, wobei die Richtungsänderung insbesondere gemäß eines Winkels von ca. 90 Winkelgraden erfolgt.

Auf den Adaptionselementen erstrecken sich die Hohlprofilmittel insbesondere parallel zu einer Auflageseite bzw. in Richtung einer Längserstreckung der Adaptionselemente zum Beispiel in Richtung deren längsseitigen Ränder oder Außenkanten. Die Hohlprofilmittel können direkt angrenzend an den Rändern oder etwas versetzt dazu verlaufen. Die aussteifende Wirkung kann ggf. noch erhöht werden, indem die Hohlprofilmittel abschnittsweise auch in Richtung einer Breitenabmessung der Adaptionselemente bzw. quer zu deren Längserstreckung verlaufen. Die Hohlprofilmittel sind bevorzugt linienförmig ausgebildet, wobei auch verzweigte Formen denkbar sind mit z. B. Abschnitten in T- und/oder V-Form.

Die Hohlprofilmittel sind insbesondere als im Querschnitt geschlossene hohle Profile ausgestaltet, z. B. als zylindrisches Rohr- oder kastenförmiges Mehrkantprofil. Die Hohlprofilmittel können alternativ auch eine offene Form aufweisen, zum Beispiel in U- oder Wannen-Form bzw. mit Masterial-Ausnehmungen in Wandungen der Hohlprofilmittel versehen sein.

Die Hohlprofilmittel können bevorzugt flächig bzw. linienförmig im festen Kontakt mit flachen Gegenabschnitten an den Adaptionselementen stehen. Dieser Linien- bzw. Flächenkontakt kann insbesondere durch Schweiß-, Löt- oder Klebeverbindung vorteilhaft realisiert sein, aber auch beispielsweise durch Vernietung oder Verschraubung z. B. über eine Mehrzahl von Verschraubungen zwischen den Hohlprofilmitteln und den Adaptionselementen.

Die Hohlprofilmittel können vorteilhafterweise eine zumindest angenähert rechteckige oder gebogene Grundform bzw. einen ringförmigen Grundriss aufweisen.

Weiter wird vorgeschlagen, dass die Hohlprofilmittel im Wesentlichen aus einem länglichen Profil gebildet sind. Ein längliches Profil ist einfach ablängbar und anschließend in eine gewünschte Form zu bringen. Außerdem steht eine Vielzahl von derartigen Langprofilen in unterschiedlichen Formen, Abmessungen bzw. Wanddicken und Materialien als Standardware zur Verfügung.

Weiter ist es vorteilhaft, dass die Hohlprofilmittel ein Rohrelement umfassen. Ein Rohrelement ist ein vergleichsweise preisgünstiges Bauteil und weist ein geringes Gewicht bei hoher Stabilität auf. Das Rohrelement ist insbesondere durchgehend hohl. In Wandungen des Rohrelements können zudem Öffnungen z. B. Bohrungen einfach eingebracht werden, z. B. um durch diese Verbindungsmittel einschrauben oder einstecken zu können.

Das Rohrelement kann durchgehend geschlossenwandig sein oder zumindest teilweise geschlitzt oder mit Öffnungen versehen sein.

Weiter ist es vorteilhaft, dass die Hohlprofilmittel eine rahmenartige Grundform aufweisen. So kann insgesamt die Stabilität der Anbringvorrichtung erhöht werden. Dabei können die Hohlprofilmittel als Hohlprofilrahmen ausgebildet sein, welcher insbesondere entlang von Außenseiten der Adaptionselemente verläuft. Der Hohlprofilrahmen kann auch durchgängig oder teilweise als offenes z. B. U-förmiges Profil ausgebildet sein. Damit wird nahezu die gesamte Fläche der Adaptionselemente versteift durch die Verbindung über den Hohlprofilrahmen bzw. durch die Umrahmung nahezu sämtlicher Bereiche der Adaptionselemente. Der Hohlprofilrahmen umfasst insbesondere gegenüberliegende und miteinender verbundene Hohlprofilabschnitte, womit sich die mit dem Hohlprofilrahmen verbundenen Adaptionselemente besonders gut aussteifen lassen. Auf die Adaptionselemente insbesondere vertikal einwirkende Kräfte bzw. Momente werden im Hohlprofilrahmen vorteilhafterweise über dessen gesamte Erstreckung aufgenommen bzw. verteilt auf angrenzende Bauteile.

Des Weiteren kann durch den innerhalb des Hohlprofilrahmens vorhandenen Freiraum Platz gelassen werden für benachbarte Elemente der Dreheinheit bzw. des Fahrzeugsitzes.

In einer erfindungsgemäßen Modifikation sind die Hohlprofilmittel einstückig ausgebildet. Bevorzugt umfassen die Hohlprofilmittel ein einstückig ausgebildetes Rohrprofil mit zusammengeführten Enden, die verbunden oder beabstandet zueinender sein können.

Die Hohlprofilmittel können insbesondere aus einem als Standardware zur Verfügung stehenden Konstruktionselement wie zum Beispiel einem Rund-, Rohr- oder Vierkantprofil gebildet sein. Die Hohlprofilmittel können beispielsweise durch ein an vier Umbiegestellen um 90 Winkelgrade umgebogenes längliches Hohlprofil gebildet sein. Die beiden Enden des so geformten Hohlprofilrahmens können dabei gegenüberliegend mit einem Abstand voneinander getrennt oder miteinander verbunden sein. Über sämtliche mit den Adaptionselementen in Kontakt befindlichen Stellen des Hohlprofilrahmens kann dieser über eine Schweißverbindung oder dergleichen fest verbunden sein. Hierdurch ergibt sich eine über die gesamte Erstreckung der Adaptionselemente wirkende Versteifung der Adaptionselemente. Mit der Einstückigkeit der Hohlprofilmittel ist zudem deren Herstellung und deren Montage an den Adaptionselementen besonders einfach möglich. Es ist aber auch ein mehrteiliger Aufbau der Hohlprofilmittel nicht ausgeschlossen, z. B. Rahmen mit zwei- oder mehr insbesondere miteinander verbundenen Rahmenabschnitten oder mit einem Doppelrahmen, welcher zwei Rahmen umfasst, wobei beispielsweise ein größerer Rahmen eine kleineren Rahmen außen umgibt bzw. umschließt.

Außerdem wird vorgeschlagen, dass die Hohlprofilmittel entlang einer Raumlinie ausgebildet sind, wobei die Raumlinie sich über die beiden Adaptionselemente und den freien Abstand zwischen den Adaptionselementen erstreckt. Die insbesondere unterbrechungs- und absatzfreie durchgängige Raumlinie kann sich insbesondere über wesentliche Abschnitte der Adaptionselemente erstrecken. So kann die versteifende Wirkung der Hohlprofilmittel in sämtlichen Bereichend der Adaptionselemente wirksam werden.

Die Hohlprofilmittel können ein im Wesentlichen geschlossenes Rohrelement umfassen, insbesondere in Rund-, Oval- oder Mehreckform. So kann über die Außenform des Rohrelements neben den Außenabmessungen die stabilisierenden Eigenschaften der Hohlprofilmittel beeinflusst werden. Ein Mehreckprofil kann eine größere Kontaktfläche mit den Adaptionselementen ausbilden bzw. ggf. besser für die Anbringung von weiteren Elementen geeignet sein.

Weiter ist es bevorzugt, dass die Hohlprofilmittel über zumindest wesentliche Abschnitte in Längsrichtung der Adaptionselemente ausgebildet sind. So kann eine Verbiege- bzw. Torsionssteifigkeit der Adaptionselemente insbesondere in einer Richtung erhöht werden, welche konstruktiv bedingt ohne versteifende Hohlprofilmittel besonders zum Verbiegen bzw. Tordieren neigt.

Die Hohlprofilmittel sind zumindest im Wesentlichen hohl, zum Beispiel rohr- oder röhrenartig. Damit weisen die Hohlprofilmittel selbst eine hohe Biege- bzw. Verwindungsstabilität bei geringem Gewicht auf bzw. sind sehr steif und mechanisch stabil gegen Verformungen.

Es ist jedoch nicht ausgeschlossen, dass neben hohlen Abschnitten der Hohlprofilmittel nichthohle Abschnitte vorhanden sind.

Weiter wird vorgeschlagen, dass die Hohlprofilmittel außen um einen Bereich ausgebildet sind, in welchem Drehlagermittel der Dreheinheit unterbringbar sind. So bleibt im Bereich innen zwischen den Hohlprofilmittel Platz für Abschnitte der Dreheinheit.

Eine Höhenabmessung der Anbringvorrichtung in Richtung der Hochachse kann erfindungsgemäß vorteilhafterweise sehr gering bleiben. Zum einen sind die Adaptionselemente plattenförmig, so dass nur deren Dicke zur Höhenabmessung beiträgt, zum anderen sind auch die aufgesetzten Hohlprofilabschnitte sehr flach bauend und tragen nur mit z. B. einem Rohrdurchmesser zur Gesamthöhe bei, wenn die Hohlprofilmittel aus einem gebogenen Rohr bestehen.

Die Erfindung bezieht sich außerdem auf eine Dreheinheit für eine Drehbewegung eines Fahrzeugsitzes um eine aufrechte Drehachse, wobei die Dreheinheit auf einer oberen Seite mit dem Fahrzeugsitz und auf einer unteren Seite stationär anbindbar ist. Die Dreheinheit umfasst eine Anbringvorrichtung gemäß einer der vorgenannten Ausbildungsformen. Damit wird eine Dreheinheit mit den aufgezeigten Vorteilen bereitgestellt.

Schließlich wird ein Fahrzeugsitz mit einer Dreheinheit der vorgenannten Ausbildung vorgeschlagen. Damit kann ein Fahrzeugsitz mit den oben genannten Vorteilen zur Verfügung gestellt werden.

### Figurenbeschreibung

Weitere Vorteile und Merkmale der Erfindung werden anhand eines in den Figuren dargestellten Ausführungsbeispieles näher erläutert.

Im Einzelnen zeigt:
- Figur 1: eine perspektivische Ansicht schräg von oben auf eine Dreheinheit mit erfindungsgemäßer Anbringvorrichtung und
- Figur 2: die Anbringvorrichtung gemäß Figur 1 in Einzelansicht.

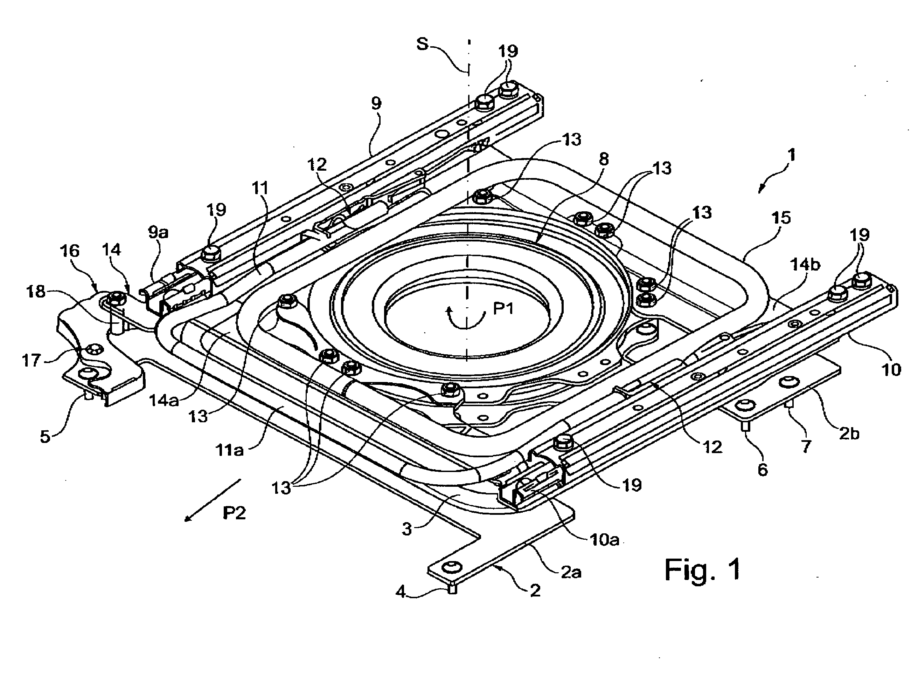

Figur 1 zeigt eine erfindungsgemäße Dreheinheit 1 für einen nicht dargestellten, um eine Hochachse S gemäß z. B. Pfeil P1 drehbaren Fahrzeugsitz. In der Dreheinheit 1 ist zudem ein Verschiebemechanismus für den Fahrzeugsitz integriert. Die Dreheinheit 1 umfasst eine erfindungsgemäße Anbringvorrichtung, die weiter unten noch erläutert ist. Die Dreheinheit 1 ist über eine Unterseite stationär gehalten bzw. beispielsweise mit einem Fahrzeugboden (nicht dargestellt) fest verschraubt. Die Unterseite der Dreheinheit 1 umfasst eine Basis 2 mit einer vorderen Basisplatte 2a und einer hinteren Basisplatte 2b, die beispielsweise über Schrauben 4, 5 vorne bzw. über Schrauben 6, 7 in einem hinteren Bereich bezogen auf einen daran anbringbaren Fahrzeugsitz in Normalposition fest mit dem Fahrzeugboden verschraubbar sind.

Die beiden Basisplatten 2b, 2b sind mit einem darauf angeschweißten rahmenartigen bzw. horizontal ausgerichteten Rundrohr 3 versteifend verbunden. Über die Basis 2 ist eine Drehlagerungseinheit 8 aufgenommen. Die Drehlagerungseinheit 8 ist entsprechend bekannten Drehlagerungseinheiten mit Lagerkörpern und Lagerringen aufgebaut und wird daher nicht näher erklärt. Die Drehlagerungseinheit 8 umfasst insbesondere den eigentlichen Drehmechanismus mit Pressteilen aus Stahl und einem integrierten Kugellager.

Außerdem umfasst die Dreheinheit 1 eine Schienenführung mit in Richtung des Pfeils P2 ausfahrbaren Gleitschienen, welche eine bezogen auf eine normale Sitzrichtung rechte Gleitschiene 9 und eine linke Gleitschiene 10 umfasst, die relativ zu jeweiligen fixierten Festschienen 9a, 10a teleskopierbar aufgenommen sind. Die Schienenführung funktioniert gemäß bekannter Schienenführungen für eine verschiebliche Bewegung eines Fahrzeugsitzes und wird daher ebenfalls nicht weiter erklärt.

Um die Gleitschiene 9, 10 aus einer gemäß Figur 1 dargstellten eingeschobenen verrasteten Position zu lösen, ist für einen Fahrzeugsitznutzer ein manuell bedienbarer Auslösebügel 11 in U-Form vorhanden. Hierfür weist der Auslösebügel 11 einen Greifabschnitt 11a auf. Über manuelle Betätigung des Greifabschnitts 11a kann von einer Person auf jeweils weiter innen liegende Auslösemechanismen 12 für die Entrastung bzw. Entriegelung der Gleitschienen 9, 10 eingewirkt werden. In der Verrastungsstellung des Auslösemechanismus 12 gemäß Figur 1 dient dieser zum Verrasten in der eingeschobenen Position der Gleitschienen 9 und 10.

Neben der Verschraubung der Drehlagerungseinheit 8 an der Basisplatte 2 sind Schraubverbindungen 13 zur Fixierung bzw. Verschraubung der Drehlagerungseinheit 8 mit einer als Drehplatte 14 ausgebildeten erfindungsgemäßen Anbringvorrichtung vorgesehen, über welche die Anbindung an den Fahrzeugsitz erfolgt.

Die Drehplatte 14 weist hierfür Adaptionselemente bzw. ein erstes Drehplattenelement 14a und ein zweites Drehplattenelement 14b auf. Die Drehplatte 14 ist über Hohlprofilmittel versteift, die hier als ein umgebogenes Rundrohr 15 ausgebildet sind.

Zum Auslösen der Dreheinheit 1 für eine Drehung eines über die Dreheinheit 1 aufgenommenen Fahrzeugsitzes um die Drehachse S, wobei sich die Drehplatte samt Fahrzeugsitz relativ zur Basis 2 dreht, ist ein Verriegelungshebel 16 vorhanden, welcher manuell von einer Person bedienbar ist, um den in Figur 1 dargestellten drehverriegelten Fahrzeugsitz zu entriegeln, so dass der Fahrzeugsitz um die Achse S verdrehbar ist, zum Beispiel bis um 180 Winkelgrade oder mehr. Der Verriegelungshebel 16 ist mit einem Schwenkgelenkmechanismus 17 zum Lösen bzw. Einrichten der Verriegelung ausgestattet.

Die Verbindung des Fahrzeugsitzes mit der Dreheinheit 1 über die Gleitschienen 9 und 10 kann über Verbindungsschrauben 19 erfolgen.

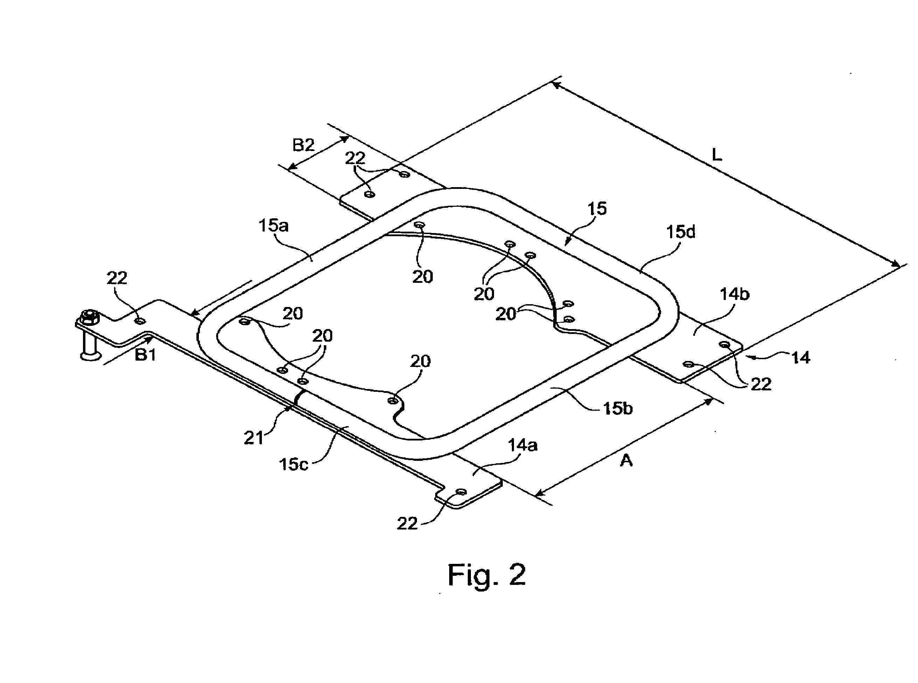

Figur 2 zeigt allein die Drehplatte 14 mit dem Rundrohr 15. In den Drehplattenelementen 14a und 14b sind Bohrungen 20 für die Schraubverbindungen 13 und weitere Bohrungen 22 zur Verschraubung mit den Gleitschienen 9 und 10 vorhanden.

Das Rundrohr 15 ist hier beispielsweise angeschweißt auf der jeweiligen nach oben zum Fahrzeugsitz gerichteten Oberseite der Drehplattenelemente 14a und 14b, die platzsparend miteinander fluchten bzw. auf einer Ebene liegen. Das Rundrohr 15 ist insbesondre einstückig und durchgängig hohl ausgebildet und bildet einen in der Grundform etwa rechteckförmigen Rahmen. Die beiden Enden des Rundrohrs 15 sind über einen geringen Spalt 21 gegenüberliegenden und fluchtend miteinander ausgerichtet. Vorteilhafterweise sind zwei zumindest nahezu parallel ausgerichtete Hohlprofilabschnitte 15a und 15b des Rundrohrs 15 vorhanden, welche einen freien Abstand A (Figur 2) zwischen den Adaptionselementen 14a und 14b überspannen, wobei diese bezogen auf eine Längenabmessung L der Adaptionselemente 14a, 14b vergleichsweise weit außen liegen, insbesondere im Bereich zwischen den über die Länge L außen liegenden Bohrungen 22 und den nächsten weitere innen liegenden 20 Bohrungen quer zur Längserstreckung der Adaptionselemente 14a, 14b. Damit wird in der Drehplatte 14 eine gleichmäßige Versteifung bzw. Kraftaufnahme unter Berücksichtigung der betreffenden Schraubverbindungen gemäß der Bohrungen 20 und 22 und dem Rundrohr 15 bereitgestellt.

Des Weiteren wirkt es sich stabilisierend aus, dass sich das Rundrohr bzw. Endabschnitte der Hohlprofilabschnitte 15a und 15b in Richtung einer repräsentativen Breite B1 des Adaptionselements14a bzw. in Richtung einer repräsentativen Breite B2 des Adaptionselements 14b jeweils über die gesamte Breite B1 bzw. B2 erstrecken bzw. zwischen gegenüberliegenden längsseitigen Rändern der Adaptionselemente 14a und 14b. Dafür sind jeweils Richtungsänderungen um 90 Grad im Verlauf des Rundrohrs 15 zwischen den Hohlprofilabschnitten 15a und 15b und dazu quer verlaufenden weiteren Hohlprofilabschnitten 15c und 15d gebildet.

Der im Ausführungsbeispiel gezeigte über den Spalt 21 getrennte Hohlprofilabschnitt 15c könnte auch durchgehend ohne Spalt 21 ausgestaltet sein.

Durch die vorgeschlagene Konstruktion wird ein Kraftring aus den Drehplattenelementen 14a,14b und dem Rundrohr 15 gebildet, über welchen auf die Dreheinheit vom Fahrzeugsitz eingeleitete Kräfte aufgenommen und weitergeleitet werden können, ohne dass es zu relevanten bzw. kritischen Verformungen an dem Fahrzeugsitz, der Drehplatte 14 und/oder der Dreheinheit 1 kommen kann. Die Drehplatte 14 ist insbesondere sehr Torsions-und Biegestabil ausgebildet und verleiht der gesamten Dreheinheit 1 eine bezogen auf die Dreheinheit 1 hohe mittige Aussteifung, was insbesondere bei Belastungen im über die Gleitschienen 9, 10 ausgefahrenen Zustand des Fahrzeugsitzes mit darin sitzender Person bedeutsam ist. Zur Aussteifung trägt insbesondere die kombinierte Konstruktion mit dem Rundrohr 15 bei, das selbst sehr leicht und enorm stabil bzw. torsionssteif ist.

Damit werden erfindungsgemäß auch bei größeren statischen und dynamischen Belastungen bleibende Verformungen, Beschädigung oder Funktionsbeeinträchtigungen des Fahrzeugsitzes samt Dreh-und Verschiebemechanismus sicher ausgeschlossen.

### Bezugszeichenliste:

- 1: Dreheinheit
- 2: Basis
- 2a, 2b: Basisplatte
- 3: Rundrohr
- 4: Schraube
- 5: Schraube
- 6: Schraube
- 7: Schraube
- 8: Drehlagerungseinheit
- 9: Gleitschiene
- 9a: Festschiene
- 10: Gleitschiene
- 10a: Festschiene
- 11: Auslösebügel
- 11a: Greifabschnitt
- 12: Auslösemechanismus
- 13: Schraubverbindung
- 14: Drehplatte
- 14a: Drehplattenelement
- 14b: Drehplattenelement
- 15: Rundrohr
- 15a: Hohlprofilabschnitt
- 15b: Hohlprofilabschnitt
- 15c: Hohlprofilabschnitt
- 15d: Hohlprofilabschnitt
- 16: Verriegelungshebel
- 17: Drehgelenk
- 18: Verriegelungsstift
- 19: Verbindungsschraube
- 20: Bohrung
- 21: Spalt
- 22: Bohrung

## Patentansprüche

1. Vorrichtung zur Anbindung eines Fahrzeugsitzes an eine Dreheinheit (1), die für eine Drehbewegung des Fahrzeugsitzes um eine aufrechte Drehachse ausgebildet und auf einer oberen Seite mit dem Fahrzeugsitz und auf einer unteren Seite stationär anbindbar ist, **dadurch gekennzeichnet, dass** zur Anbringung an der oberen Seite der Dreheinheit (1), bezüglich der Drehachse gegenüberliegende plattenförmige Adaptionselemente (14a, 14b) mit einem freien Abstand zueinander vorhanden sind, wobei die Adaptionselemente (14a, 14b) zur gemeinsamen Aussteifung über Hohlprofilmittel (15) verbunden sind, die auf den Adaptionselementen (14a, 14b) aufgesetzt sind, und die Hohlprofilmittel (15) zumindest Hohlprofilabschnitte umfassen, die beabstandet voneinander jeweils den freien Abstand zwischen den Adaptionselementen (14a, 14b) überspannen und nach einer Richtungsänderung entlang der Adaptionselemente (14a, 14b) verlaufen.

2. Vorrichtung nach Anspruch 1, **dadurch gekennzeichnet, dass** die Hohlprofilmittel (15) im Wesentlichen aus einem länglichen Profil gebildet sind.

3. Vorrichtung nach Anspruch 1 oder 2, **dadurch gekennzeichnet, dass** die Hohlprofilmittel (15) ein Rohrelement umfassen.

4. Vorrichtung nach einem der vorhergehenden Ansprüche, **dadurch gekennzeichnet, dass** die Hohlprofilmittel (15) eine rahmenartige Grundform aufweisen.

5. Vorrichtung nach einem der vorhergehenden Ansprüche, **dadurch gekennzeichnet, dass** die Hohlprofilmittel (15) einstückig ausgebildet sind.

6. Vorrichtung nach einem der vorhergehenden Ansprüche, **dadurch gekennzeichnet, dass** die Hohlprofilmittel (15) ein einstückig ausgebildetes Rohrprofil mit gegenüberliegend positionierten Enden umfassen.

7. Vorrichtung nach einem der vorhergehenden Ansprüche, **dadurch gekennzeichnet, dass** die Hohlprofilmittel (15) entlang einer Raumlinie ausgebildet sind, wobei die Raumlinie sich über die beiden Adaptionselemente (14a, 14b) und den freien Abstand zwischen den Adaptionselementen (14a, 14b) erstreckt.

8. Vorrichtung nach einem der vorhergehenden Ansprüche, **dadurch gekennzeichnet, dass** die Hohlprofilmittel (15) über zumindest wesentliche Abschnitte in Längsrichtung der Adaptionselemente (14a, 14b) ausgebildet sind.

9. Vorrichtung nach einem der vorhergehenden Ansprüche, **dadurch gekennzeichnet, dass** die Hohlprofilmittel (15) außen um einen Bereich ausgebildet sind, in welchem Drehlagermittel (8) der Dreheinheit (1) unterbringbar sind.

10. Dreheinheit (1) für eine Drehbewegung eines Fahrzeugsitzes um eine aufrechte Drehachse, wobei die Dreheinheit (1) auf einer oberen Seite mit dem Fahrzeugsitz und auf einer unteren Seite stationär anbindbar ist, wobei eine Vorrichtung nach einem der vorhergehenden Ansprüche vorhanden ist.

11. Fahrzeugsitz mit einer Dreheinheit (1) nach Anspruch 10.
